# EUROPÄISCHE PATENTANMELDUNG

(11) **EP 1 151 789 A1**
(43) Veröffentlichungstag der Anmeldung: **07.11.2001**
(21) Anmeldenummer: 01109430.7
(22) Anmeldetag: 23.04.2001
(51) Int. Cl.: B01J 13/14, B01J 13/16

(54) **Mikrokapseln erhältlich unter Verwendung von Eiweisshydrolysaten als Emulgator**

(30) Priorität: 03.05.2000 DE 10021411; 22.05.2000 DE 10025302
(71) Anmelder: BAYER AG, 51368 Leverkusen (DE)
(72) Erfinder: Traübel, Harro, Dr., 51373 Leverkusen (DE); Ehlert, Hans-Albert, Jurong Town (SG); Nehen, Ulrich, Dr., 51373 Leverkusen (DE); Weisser, Jürgen, Dr., 41542 Dormagen (DE)

(57) **Zusammenfassung**

Mikrokapseln mit Wänden, die nach dem Polyadditionsverfahren von Polyisocyanaten und Polyaminen in einer wäßrigen Emulsion erhältlich sind, wobei als Emulgator Eiweißhydrolysat eingesetzt wird.

## Beschreibung

Die Erfindung betrifft Mikrokapseln, ein Verfahren zur ihrer Herstellung sowie ihre Verwendung, insbesondere in kohlefreien Durchschreibepapieren.

Kapseln für kohlefreie Durchschreibepapiere werden mit Hilfe von verkapselten Leukofarbstoffen, die sich an sauren Oberflächen zu Farbstoffen entwickeln können, hergestellt (siehe EP-A-780 154). Als Wandmaterial für diese Kapseln werden unter anderem Polyurethanhamstoffe benutzt, die in einem Grenzflächen-Polyadditionsverfahren entstehen. Das Verfahren wird im allgemeinen wie folgt durchgeführt: Ein in der Leukoform vorliegender Farbstoff und ein mindestens bifunktionelles Isocyanat werden in einer hydrophoben Flüssigkeit gelöst und dieses hydrophobe Gemisch in Wasser emulgiert. Das Wasser enthält häufig einen Emulgator oder ein Schutzkolloid, wie z.B. teilverseiftes Polyvinylacetat oder Polyvinylalkohol. Dann gibt man der Emulsion ein gegenüber Isocyanaten reaktives Amin zu. An der Grenzfläche der emulgierten hydrophoben Tröpfchen findet eine Polyaddition statt, wodurch sich eine Polyharnstoffwand um die hydrophoben Tröpfchen bildet. Derartige Verfahren sind beispielsweise in EP-A-780 154 beschrieben. Diese Kapseln werden auf die Oberflächen von Papieren aufgebracht, wobei übliche Streichrezepturen angewendet werden.

Nahezu alle Kapseln gelangen nach Gebrauch über das Altpapier wieder in den Papierstoffkreislauf zurück. Bei der Wiederaufarbeitung der gebrauchten Papiere werden die Cellulosefasern von den Streichfarben und dem Kapselmaterial getrennt. Gelatine und Polyurethankapseln können als Schlamm der Landwirtschaft zugeführt werden. Schlämme aus Papierfabriken haben - sofern keine störenden Komponenten darin enthalten sind - einen bodenverbessernden Einfluß, im Schlamm enthaltende Polyurethanharnstoffe und Kondensationsprodukte der Gelatine geben nach längerer Lagerzeit bioverfügbaren Stickstoff frei - sie wirken düngend. Störend in der Landwirtschaft wirken aber beispielsweise Polymerisate aus Vinylgruppen enthaltenden Monomeren, da diese Verbindungen nicht oder nur schlecht abgebaut werden. Auch Derivate des teilverseiften Polyvinylacetats oder Polyvinylalkohols, die in der Regel als Viskositätsregler bzw. Emulgatoren von Mikrokapsel-Dispersionen eingesetzt werden, zählen dazu. Auch das zur Wandbildung notwendige Amin des Polyisocyanat-Kapsel-Systems, das für die Polyharnstoffbildung nötig ist, kann bei der Weiterverarbeitung störend wirken, wenn es nicht quantitativ eingebaut wurde. Insbesondere können diese Produkte beim Recyclisieren von Papieren oder Papierresten, die solche Kapseln in der Beschichtung haben, in der Papiermaschine stören.

Aufgabe der vorliegenden Erfindung war es, Mikrokapseln bereitzustellen, die die oben beschriebenen Nachteile bei der Recyclisierung nicht aufweisen und trotzdem die üblichen Eigenschaften und Vorteile von Mikrokapseln besitzen.

Überraschenderweise wurden nun Mikrokapseln mit Kapselwänden gefunden, die nach dem Polyadditionsverfahren von Polyisocyanaten und Polyaminen in einer wäßrigen Emulsion erhältlich sind, wobei als Emulgator Eiweißhydrolysat eingesetzt wird.

Als bevorzugte Eiweißhydrolysate werden Hydrolysate natürlicher Proteine wie Kollagenhydrolysat, Gelatine oder synthetische Proteine eingesetzt. Die Eiweiße können sowohl durch enzymatische Spaltung hydrolysiert werden als auch durch alkalische Hydrolyse. Bei der alkalischen Hydrolyse werden vorzugsweise Produkte erhalten, deren isoelektrischer pH-Bereich bei < 6 liegt. Ebenfalls möglich ist die saure Hydrolyse der Eiweiße, wobei vorzugsweise Hydrolysate mit einem isoelektrischen pH-Bereich von < 7 erhalten werden.

Bevorzugt sind Eiweißhydrolysate, die nach der Hydrolyse neutralisiert wurden.

Bevorzugte Eiweißhydrolysate werden aus ungegerbten Rohhäuten, gegerbten Häuten sowie insbesondere aus Lederfalzspänen gewonnen. Der organische Anteil wäßriger Lösungen der bevorzugt eingesetzten Eiweißhydrolysate liegt bei 10 bis 40, vorzugsweise bei 20 bis 30 Gew.-%. Ebenfalls bevorzugt besitzt das Eiweißhydrolysat eine elektrische Leitfähigkeit von < 5 000 µS/cm.

Das verwendete Eiweißhydrolysat wird vorzugsweise in einer Menge von 1 bis 200 %, vorzugsweise 1 bis 100 %, bezogen auf Kapselmaterial eingesetzt.

Das eingesetzte Eiweißhydrolysat liegt vorzugsweise als ca. 30 %ige wässrige Lösung vor. Besonders bevorzugtes Eiweißhydrolysat wird aus Lederfalzspänen gewonnen, weil es im allgemeinen besonders einheitlich ist. Dabei ist insbesondere Eiweißhydrolysat aus Möbellederfalzspänen zu nennen, mit einem Feststoffgehalt von ca. 20 bis 35 Gew.-%, vorzugsweise 25 bis 32 Gew.-%, einem organischen Anteil von 20 bis 30 Gew.-%, einem pH-Wert (telquel) von 10 bis 12, einem Aschegehalt (bezogen auf Feststoff) von 13 bis 27 Gew.-%, vorzugsweise von 13 bis 17 Gew.-%, einer Viskosität (Brookfield 100 rpm) von 25 bis 35, vorzugsweise von 27 bis 32 mPas, einer Leitfähigkeit von <4 800 µS/cm, vorzugsweise 1000 bis 2500 µS/cm (1g/l Asche) und einer Oberflächenspannung von 50 bis 60, vorzugsweise 55 bis 60 mN/cm.

Als Polyisocyanate der erfindungsgemäßen Kapseln werden bevorzugt wenigstens bifunktionelle Isocyanate verwendet, die im Mittel pro Mol wenigstens eine Esterund/oder Amidgruppe in der Hauptkette enthalten. Diese bevorzugt eingesetzten Isocyanate werden im folgenden auch als "Isocyanate A" bezeichnet.

Zur Herstellung erfindungsgemäßer Mikrokapseln kann man z.B. Isocyanate oder Isocyanatgemische verwenden, die 100 bis 1 Gew.-% Isocyanate A und 0 bis 99 Gew.-% für die Herstellung von Mikrokapseln an sich bekannte, mindestens bifünktionelle Isocyanate enthalten wie beispielsweise hydrophilierte Polyisocyanate. Durch Variation des Verhältnisses der Isocyanate A zu üblichen Isocyanaten kann man die Eigenschaften der erfindungsgemäßen Mikrokapseln beliebig einstellen, insbesondere ihre mechanische Festigkeit und ihre Hydrolysebeständigkeit sowie die papiertechnischen Eigenschaften.

Bevorzugt sind Isocyanate A, bei denen mindestens 2 Isocyanatgruppen über einen organischen Rest verbunden sind, der in der Hauptkette mindestens eine Ester- oder Amidgruppe, eine Carbonat- oder eine Allophanatgruppe oder verschiedene dieser Gruppen enthält.

Weiterhin bevorzugt sind Isocyanate A und Isocyanat A enthaltende Isocyanatgemische, die Emulgatoren enthalten. Die Emulgatoren können dabei als solche den Isocyanaten zugegeben werden (= externe Emulgatoren). Die Emulgatoren können aber auch in die Isocyanate eingebaut sein. Einen derartigen "Emulgatoreinbau" kann man beispielsweise erhalten, indem man einen Teil der vorhandenen Isocyanatgruppen mit zur Salzbildung befähigten und/oder hydrophilierend wirkenden Verbindungen reagieren läßt. Beispielsweise kann man 5 bis 50 %, vorzugsweise 8 bis 30 %, der vorhandenen Isocyanatgruppen so reagieren lassen.

Als zur Salzbildung befähigte und/oder hydrophilierend wirkende Verbindungen kommen beispielsweise Dimethylolpropionsäure, N,N-Dimethylethanolamin und hydrophile, vorzugsweise monofunktionelle Polyether in Frage. Gegebenenfalls können Einzelheiten zur Umsetzung von Isocyanaten mit zur Salzbildung befähigten Verbindungen, der EP-A 0 564 912 oder der DE-A 4 418 836 entnommen werden.

Isocyanate A können durch Umsetzung mindestens bifunktioneller Isocyanate mit Verbindungen erhalten werden, die OH- und Ester-, Amidgruppen, Carbonat oder Allophanatgruppen enthalten. Derartige Umsetzungen sind bekannt. Als Ausgangsisocyanate kommen z.B. in Frage:
Diisocyanate wie 1,4-Diisocyanatobutan, 1,6-Diisocyanatohexan, 1,5-Diisocyanato-2,2-dimethylpentan, 2,2,4- und 2,4,4-Trimethyl-1,6-diisocyanatohexan, 1,10-Diisocyanatodecan, 1,3- und 1,4-Diisocyanatocyclohexan, 1-Isocyanato-3,3,5-trimethyl-5-isocyanatomethylcyclohexan (Isophorondiisocyanat), 4,4'-Diisocyanatodicyclohexylmethan, 2,4- und 2,6-Diisocyanato-methylcyclohexan und deren Gemische. Prinzipiell können auch aromatische Isocyanate, z.B. Toluylendiisocyanate oder 4,4'-Diisocyanato-diphenylmethan eingesetzt werden. Wegen höhere Lichtechtheit und
geringere Reaktivität gegenüber Wasser sind jedoch die aliphatischen Isocyanate bevorzugt. Anteilig können auch Polyisocyanate, die durch Modifizierung der oben genannten Diisocyanate oder deren Mischungen nach bekannten Verfahren darstellbar sind und z.B. Uretdion-, Urethan-, Isocyanurat-, Biuret- und/oder Allophanatgruppen enthalten, mit eingesetzt werden.

Als OH- und Ester- und/oder Amidgruppen enthaltende Verbindungen sind z.B. Produkte geeignet, die im Mittel mindestens 2 OH-Gruppen und im Mittel mindestens eine Ester- und/oder Amidgruppe aufweisen.

Geeignet sind z.B. kurzkettige hydroxyfunktionelle Polyester, wie sie durch Veresterung von Diolen und/oder Triolen mit Dicarbonsäuren und/oder Dicarbonsäureanhydriden oder durch Umesterung von Diolen und/oder Triolen mit Dicarbonsäureestern kurzkettiger monofunktioneller Alkohole und Abdestillation der entstehenden kurzkettigen Alkohole zugänglich sind. Bevorzugte Polyester besitzen eine mittlere Molmasse von 148 bis 2000 g/mol, vorzugsweise 148 bis 1000, insbesondere 148 bis 500 g/mol.

Weiter geeignete Isocyanate sind beispielsweise die durch Umsetzung von Polysilylethern und Isocyanatoalkylcarbonsäurechloriden (unter Abspaltung von Trimethylchlorsilan) erhältlichen Polyisocyanate mit Estergruppen.

Als Säurekomponenten seien folgenden Verbindungen genannt: Kohlensäuredimethylester, -diethylester und -diphenylester, Ethylenglykolcarbonat, Propylenglykolcarbonat, Oxalsäure- und Malonäurediester, Bernstein-, Glutar- und Maleinsäure sowie deren Anhydride, Adipin-, Sebacin-, (auch hydrierte) Phthal-, Hydroxymono- und -dicarbonsäuren (gegebenenfalls in Form ihrer inneren Ester = Lactone) wie Glykol-, Wein-, Milch-, Zitronen-, Hydroxycapron-, Hydroxybutter- und Ricinolsäure.

Als Diole seien z.B. folgende technisch gut verfügbare genannt: Ethan-, 1,2- und 1,3-Propan-, isomere Butan-, Pentan- und Hexandiole und ethergruppenhaltige Oligound Polymere von Ethylen- und Propylenglykol. Auch cycloaliphatische und aromatische Diole seien erwähnt, sie sind aber wegen der hohen Viskosität der Ester nicht bevorzugt. Geeignete Triole sind beispielsweise Glycerin und Trimethylolpropan sowie deren Ethoxylierungs- und Propoxylierungsprodukte.

Polyester können z.B. durch Kondensation der Säuren und/oder deren Ester mit monofunktionellen Alkoholen und/oder der Anhydride der Säuren mit den angeführten Di- und/oder Triolen nach bekannten Verfahren gewonnen werden. Durch Einsetzen der OH-Verbindungen im Überschuß und anschließende Extraktion mit Wasser oder durch Kurzwegdestillation kann eine enge Molekulargewichtsverteilung, damit eine niedrige Viskosität und ein geringer Gehalt an nicht Estergruppen tragenden Komponenten eingestellt werden. Ebenfalls gut geeignet ist die ringöffnende Umesterung von Lactonen (beispielsweise Butyro-, Valero- oder Caprolacton). Diese Umesterung kann gegebenenfalls mit den oben genannten Maßnahmen gekoppelt werden.

Besonders geeignete, OH-Gruppen enthaltende Verbindungen können durch Reaktion einer Di- oder Hydroxy-Carbonsäure mit Alkylenoxyd erhalten werden. Dabei entstehen in einfacher Weise definierte, niedermolekulare Esterdiole.

Amidgruppen enthaltende OH-Verbindungen können z.B. aus den genannten Säuren oder deren Estern (auch Lactonen) durch Reaktion mit Hydroxyalkylaminen, die eine sekundäre Aminogruppe enthalten, hergestellt werden. Bei den Hydroxyalkylaminen handelt es sich z.B. um Addukte des Ethylenoxids oder Propylenoxids an Mono-C ₁-C₄-alkylamine.

Diese letztgenannten Addukte sind besonders geeignet, weil sie durch die Selektivität der Aminogruppen als überwiegend definierte Verbindungen hergestellt werden können. Die mittleren Molekulargewichte von OH-Verbindungen, die zur Herstellung von Isocyanaten A geeignet sind, können z.B. im Bereich 148 bis 2 000 liegen. Vorzugsweise betragen die mittleren Molgewichte 148 bis 1 000, insbesondere 148 bis 500.

Zur Herstellung von Isocyanaten A können NCO-enthaltende Verbindungen mit den OH-enthaltenden Komponenten z.B. im NCO/OH-Verhältnis von 1,3 bis 20:1, vorzugsweise 1,5 bis 10:1, umgesetzt werden.

Bei NCO/OH-Verhältnissen von über 1,5:1 bleibt ein beträchtlicher, von der Art des Isocyanats abhängiger Anteil an nicht reagiertem Isocyanat zurück. Aus gewerbehygienischen Gründen sollten diese freien Isocyanate entfernt werden, z.B. durch Dünnschichtdestillation. Hohe NCO/OH-Verhältnisse sind bevorzugt, weil dann viskositätserhöhende Kettenverlängerungsreaktionen weitgehend unterdrückt werden können.

Es können auch Ester der hypothetischen Allophansäure (sogenannte Allophanate) eingesetzt werden, die durch Reaktion einer Urethangruppe mit einer Isocyanatgruppe entstehen können. Wird die Umsetzung der Isocyanate mit den Hydroxylgruppen enthaltenden Verbindungen bei 150°C oder höheren Temperaturen oder in Anwesenheit von Katalysatoren (z.B. Chlorwasserstoffgas oder organischen Zinnverbindungen) vorgenommen, so werden je nach Reaktionszeit die Urethangruppen mehr oder minder vollständig in Allophanatgruppen überführt. Diese Maßnahme bietet den Vorteil, Produkte hohen Isocyanatgehaltes, hoher Funktionalität und niedriger Viskosität zu erhalten, was für die vorgesehene Anwendung von Vorteil ist.

Zur Verbesserung der Wasserdispergierbarkeit können die Isocyanate mit ionischen Gruppen (siehe z.B. DE-A 4 226 110) und/oder mit hydrophilierenden Polyetherketten (siehe z.B. DE-A 4 211 480) versehen werden. Geeignete Polyether für diesen Zweck sind beispielsweise monofunktionelle Polyether mit Ethylenoxidketten und einer mittleren Molmasse von 220 bis 2000 g/mol, vorzugsweise 350, 550 und 850 g/mol mit Methyl- oder Ethylendgruppen. Polyetheraddition und Allophanatisierung können auch in einem Schritt erfolgen.

Zur Erleichterung der Emulsionsbildung bei der Kapselherstellung ist die Reaktion der Polyisocyanate mit hydrophilierenden Komponenten gegenüber der Vermischung mit externen Emulgatoren bevorzugt.

Die anderen für die Kapselherstellung benötigten Komponenten, also das einzukapselnde Material, das hydrophobe Lösungsmittel, die wäßrige Phase und das Polyamin entsprechen dem Stand der Technik.

Als einzukapselnde Materialen kommen beliebige, vorzugsweise hydrophobe Materialien in Frage, beispielsweise Parfümöle, Pflanzenschutzmittel, Reaktivkleber und Pharmazeutika. Bevorzugt sind jedoch in Leukoform vorliegende Farbstoffe für das Einsatzgebiet kohlefreier Durchschreibepapiere. Pflanzenschutzmittel mit verzögerter Freisetzung der Wirkstoffe können ebenfalls mit erfindungsgemäßen Mikrokapseln erhalten werden. Bei der Verwendung erfindungsgemäßer Mikrokapseln auf dem Pflanzenschutzgebiet verwendet man als hydrophobe Lösungsmittel vorzugsweise natürliche Öle, z.B. Rizinusöl oder Palmöl.

Für die Verwendung erfindungsgemäßer Mikrokapseln auf dem Gebiet kohlefreier Durchschreibepapiere kommen als zu verkapselnde Farbstoffe in Leukoform (= sogenannte Farbgeber oder Colorformer) z.B. Triphenylmethanverbindungen, Diphenylmethanverbindungen, Xanthenverbindungen, Benzoxazinverbindungen, Thiazinverbindungen und Spiropyranverbindungen in Frage, wobei auch Gemische von Farbstoffen in Leukoform von Interesse sind. Als hydrophobe Lösungsmittel für diesen Zweck seien genannt: Substituierte Diphenyle, wie sek.-Butyl-diphenyl, Phenylxylylethane, chloriertes Diphenyl, chloriertes Paraffin, Baumwollsamenöl, Erdnußöl, Sojaöl, Rapsöl, Palmöl, Trikresylphosphat, Silikonöl, Dialkylphthalate, Dialkyladipate, teilhydrierte Terphenyle, alkyliertes Diphenyl, alkyliertes Naphthalin, wie Diisopropylnaphthalin, Diarylether, Arylalkylether und höher alkyliertes Benzol, sowie beliebige Mischungen dieser hydrophoben Lösungsmittel und Mischungen einzelner oder mehrerer dieser hydrophoben Lösungsmittel mit Kerosin, Paraffinen und/oder Isoparaffinen, gegebenenfalls in Kombination mit Verschnittmitteln, wobei darunter beispielsweise Paraffingemische (z.B. Exxol-Typen), Isohexadecan, hydrierte naphthenische Erdölfraktionen (z.B. Nytex-, Gravex-Typen) sowie Dodecylbenzole verstanden werden.

Die erfindungsgemäßen Microkapselwände sind vorzugsweise aus Reaktionsprodukten der genannten Polyisocyanate und vernetzend wirkenden Polyaminen hergestellt.

Als Beispiele für Polyamine seien aliphatische primäre und sekundäre Polyamine genannt.

Bevorzugt sind (Poly)alkylamine, wie Ethylendiamin, Diethylentriamin und seine Homologen, Propylendiamin, Piperazin, Hexamethylendiamin, Guanidin, gegebenenfalls alkylierte Hydrazinderivate und Salze. Weiterhin ist Guanidin selbst oder in Form seines Carbonats besonders geeignet. Auch Wasser kann prinzipiell als Vernetzer wirken.

Die Mengenverhältnisse der einzelnen Komponenten zur Mikrokapselherstellung können ebenfalls dem Stand der Technik entsprechen. Der Wandanteil beträgt üblicherweise 1 bis 25 Gew.-% (% Wandanteil = (Masse Isocyanat + Masse Ölphase) x 100). Beispielsweise kann man das jeweilige Polyamin in einem solchen Verhältnis zum Isocyanat einsetzen, dass die Äquivalente an Hydroxyl- oder Aminogruppen 50 bis 100 % der Äquivalente der NCO-Gruppen betragen. Die hydrophobe Phase kann beispielsweise 0,1 bis 10 Gew.-%, vorzugsweise 1 bis 8 Gew.-% einzukapselndes Material, 1 bis 25 Gew.-%, vorzugsweise 4 bis 18 Gew.-% Polyisocyanate und ergänzend zu 100 Gew.-% hydrophobe Lösungsmittel enthalten. Das Gewichtsverhältnis von hydrophober Phase zu Wasserphase kann beispielsweise 10:90 bis 60:40, vorzugsweise 30:70 bis 50:50 betragen.

Die wäßrige Phase kann Stabilisatoren, d.h. als Schutzkolloide wirkende Mittel und/oder viskositätserhöhende Mittel enthalten. Beispiele für solche Mittel sind Proteinhydrolysate wie Gelatine, gegebenenfalls in Kombination mit Polyvinylalkoholen, teilverseiftem Polyvinylacetat und Carboxymethylcellulose. Solche Mittel können, bezogen auf die wäßrige Phase, beispielsweise in Mengen von 0,05 bis 5 Gew.-% enthalten sein (berechnet als Festkörper). Im allgemeinen ist es vorteilhaft, die Mikrokapselbildung bei mäßig erhöhter Temperatur zu Ende zu bringen, da dies aber beim Bioabbau stört, wird vorgezogen ohne sie zu arbeiten.

Die Herstellung erfindungsgemäßer Mikrokapseln kann in üblichen Dispersionsapparaturen oder Emulgierapparaturen erfolgen. Man erhält dabei eine Mikrokapseldispersion (Slurry), wobei sich der gelöste Wirkstoff im Inneren von kleinen Mikrohohlkügelchen befindet. Für kohlefreie Durchschreibepapiere wird ein Slurry, gegebenenfalls nach Zusatz eines Bindemittels und/oder sonstiger Hilfsstoffe auf ein Basispapier aufgetragen, was ein sogenanntes coated back paper (CB) ergibt. Ganz besonders bevorzugt ist als Bindemittel Stärke und/oder - ebenfalls bioabbaubares - Polyurethan, wie sie z.B. in EP-A-824 557, EP-A-828 788 und EP-A-841 432 beschrieben sind. Das CB wird auf ein sogenanntes coated front paper (CF), das mit einer Schicht überzogen ist, die einen Entwickler für den Farbstoff enthält, aufgelegt. Bei Druckeinwirkung, z.B. durch einen Bleistift, Kugelschreiber oder eine Schreibmaschinentype öffnen sich die Kapseln auf dem CB an den Stellen, an denen Druck ausgeübt wurde, und der austretende Leukofarbstoff kommt mit dem Entwickler des CF in Berührung. Der austretende Leukofarbstoff entwickelt sich dabei zum Farbstoff und gibt die Druckstelle als Punkt, Strich, Schrift etc. zu erkennen.

Die erfindungsgemäßen Mikrokapseln haben eine Reihe von überraschenden Vorteilen: Sie sind leichter abbaubar als bisher übliche Mikrokapseln, beispielsweise unter den Bedingungen, wie sie in sogenannten De-Inking-Prozessen oder bei äußerlichen medizinischen Anwendungen und agrarischen Kulturen herrschen. Wenn sie ganz oder teilweise aus Isocyanaten mit eingebauten hydrophilierenden Resten hergestellt wurden, kann man auch sehr kleine Kapseln, z.B. Kapseln mit mittleren Durchmessern von 1 bis 10 µm herstellen.

Die Erfindung betrifft weiterhin ein Verfahren zur Herstellung der erfindungsgenäßen Mikrokapseln, das dadurch gekennzeichnet ist, dass man eine Ölphase, die ein organisches, mit Wasser nicht mischbares, gegenüber Isocyanaten inertes Lösungsmittel, den zu verkapselnden Stoff und Polyisocyanate enthält, in einer Wasserphase, die als Emulgator Eiweißhydrolysate und gegebenenfalls Zusatzstoffe enthält, emulgiert und der Emulsion einen NH₂-Gruppen enthaltenden Vernetzer (Polyamin) zufügt, der mit Isocyanatgruppen reagieren kann.

Die Erfindung betrifft weiterhin die Verwendung der erfindungsgemäßen Mikrokapseln, vorzugsweise solche, die in Leukoform vorliegende Farbstoffe enthalten, zur Herstellung von kohlefreien Durchschreibepapieren.

In einer bevorzugten Ausführungsform werden Mischungen aus 80 bis 900 Gew.-Teilen eines Biuretgruppen-haltigen aliphatischen Polyisocyanat auf Basis von Hexamethylendiisocyanat (Desmodur® N 3200) und 0 bis 20 Teilen eines Adduktes aus 70 bis 87 Gew.-% eines Isocyanuratgruppen-haltigen Polyisocyanat auf Basis von Hexamethylendiisocyanat (Desmodur® N 3300) und 13 bis 30 Gew.-% eines auf Methanol gestarteten Polyethylenoxid (monofunktionell, Molmasse: 350 g/mol) zur Kapselherstellung eingesetzt.

Bevorzugte Polyaminvernetzer sind in dieser bevorzugten Ausführungsform Diethylentriamin, Guanidincarbonat und Ethylendiamin sowie NH₃.

In dieser Ausführungsform werden bevorzugt Eiweißhydrolysate als Emulgatoren eingesetzt und das Lösungsmittel (Ölphase) Diisopropylnaphthalin allein oder im Gemisch mit Verschnittmitteln eingesetzt.

In einem besonders bevorzugten Verfahren werden Farbgeber in Diisopropylnaphthalin und gegebenenfalls Verschnittmittel gelöst, das Polyisocyanat A und/oder ein Polyisocyanat mit Biuretgruppen zugegeben und diese Ölphase bei 10 bis 30°C in einer Wasserphase emulgiert, die das Eiweißhydrolysat als Emulgator enthält. Dann wird unter starker Scherung die Tropfengröße eingestellt und eine dem NCO-Gehalt der Emulsion entsprechenden Menge an Guanidincarbonat (10 %ige wässrige Lösung) zugegeben (Guanidincarbonat: NCO = 0,5 : 1 bis 1 : 1) und die Mischung unter Rühren auf 70 bis 80°C erwärmt. Nach 2 bis 4 Stunden bei 70 bis 80°C wird abgekühlt und die erhaltene Microkapselslurry gegebenenfalls mit Verdickern in eine lagerstabile Form gebracht oder sofort auf ein Trägerpapier aufgetragen.

Die Kapselslurry hat vorzugsweise einen Festgehalt von 30 bis 50 Gew.-% (Feststoffgehalt ist der Gehalt an Trockenkapseln. Trockenkapseln sind die Anteile der Kapseldispersion, die bei einer Trocknungstemperatur von 150°C und Normaldruck nicht flüchtig sind.)

### Anwendungsbeispiel

### Beispiel (Stand der Technik)

40 g eines Isocyanats auf Basis von Bis-(isocyanato-hexyl)-oxadiazin-trions werden in 360 g einer Farbgeberlösung bestehend aus 345,6 g Diisopropylnaphthalin und 14,4 g einer üblichen Farbgebermischung (bestehend aus 65 % PERGASCRIPT® Schwarz PSD 134,7 % PERGASCRIPT® Rot I6B, 15 % PERGASCRIPT® Grün I2 GN und 13 % PERGASCRIPT® Blau SRB (alle Produkte stammen von der Fa. Ciba-Geigy) gelöst. Diese Lösung wurde bei 30°C so in 506,4 g einer wäßrigen, 1 Gew.-% Polyvinylalkohol-Lösung (Airvol® 523, Air Products) emulgiert, daß eine Emulsion entstand. Hierbei war Rühren mit 650 U/Min erforderlich. Bei Raumtemperatur wurden dann zu 700 g der so hergestellten Emulsion 45,8 g einer 9 %igen Diethylentriamin Lösung in Wasser zugefügt. Die Aminlösung war so konzentriert, daß die eingebrachten Amin-Äquivalente genau den NCO-Äquivalenten des Isocyanat entsprachen.

Innerhalb 1 Stunde wurde die Temperatur auf 45°C, dann 4 h auf 55°C unter Rühren mit einem Laborrührer erwärmt. Dann wurde unter Rühren über Nacht wieder auf Raumtemperatur abgekühlt. Danach war die Wandbildung durch Polyaddition zum Polyharnstoff abgeschlossen - es ließ sich kein NCO mehr nachweisen.

Dabei wird eine 40,8 %ige Mikrokapseldispersion erhalten, mit Kapseln eines mittleren Durchmessers von 12 µm. Diese Kapseldispersion konnte in herkömmlicher Weise auf Papier aufgestrichen werden.

Mit Hilfe einer Mischung aus 12,4 g Mikrokapseldispersion und 20,4 g einer Latexmischung (bestehend aus 1601,3 g Wasser, 201,3 g Arbocell® DE 600/30 (der Fa. J. Rettenmaier und Söhne GmbH + Co. in Ellwangen) sowie eines Papierbinders KA 8588 (der Bayer AG)) sowie 22 g Wasser wurde eine Streichfabe hergestellt und zur Prüfung auf ein ungestrichenes Papier zur Herstellung eines CB-Papiers (CB = coated backside) sowie auf ein Papier, das mit einer sauer reagierenden Trägerschicht (CF) (CF = coated frontside) beschichtet worden war, zur Erzielung eines SC-Papiers (SC = self contained) gestrichen.

Das CB-Papier hatte im normalen Durchschreibetest eine Durchschrift der Intensität von 35 % (bezogen auf nicht durchgeschriebenes Papier).

Zur Überprüfung der Aufschließbarkeit der Kapseln wurde das SC-Papier 12 Stunden bei 50°C über Ammoniakdampf Hydrolysebedingungen ausgesetzt. Nach Entnahme des Prüfblattes aus der Hydrolysevorrichtung und kurzem Liegen bei Raumtemperatur verfärbte sich das SC und hatte dann einen Remissionswert von 67 % (bezogen auf ungealtertes Papier). Dies zeigt, daß die Kapseln unter den Hydrolysebedingungen nicht beständig blieben. Eine nach dem Stand der Technik mit Hilfe von Bis-isocyanatohexyl-oxadiazin-trion hergestellte Kapsel (Unterschied war die Umdrehungszahl des Mischers bei der Herstellung der Primäremulsion, wo anstelle der 654 U/Min 8 000 U/Min angewandt worden waren) zeigte bei einer entsprechenden Alterung, daß - bezogen auf ungealtertes SC - nur 40 % des Lichtes remittiert werden, was auf eine dichtere Kapsel nach dem Hydrolysetest hinweist und was auf normalen, unzureichenden Abbau unter Deinking-Bedingungen hinweist.

### Beispiel 1

### Typische Versuchsdurchführung

Unter Kühlung werden 500 ml Emulgatorlösung aus 485 ml Wasser und 15 g Eiweiß-Hydrolysat (30 %ig) vorgelegt. Während 40 Sekunden werden 500 ml einer Lösung von 20 g Farbgebermischung (aus 65 % PERGASCRIPT® Schwarz PSD 134 / 7 % PERGASCRIPT® Rot I6B /15 % PERGASCRIPT® Grün I2GN / und 13% PERGASCRIPT® Blau SBR) und 35 g eines Biuretgruppen-haltigen Polyisocyanats (DESMODUR® N 3200) in 445 ml Diisopropylnaphthalin (KMC 113) einemulgiert (Aggregat: Kotthof Mischsirene Typ MS16AA11G bei 950 U/min, Rotor/Stator-Mischer).

Dann wird weitere 4 Minuten bei 5200 U/min bei 20 bis 25°C emulgiert. Danach werden 88 g einer 10 % Guanidiniumcarbonatlösung zugegeben und die Dispersion unter Rühren langsam auf 70°C aufgeheizt (2 h). Nach weiteren 2 h bei 70°C wird auf RT abgekühlt.

Die Dispersion wird mit 40 ml Verdicker stabilisiert (2,5 % eines Carboxymethylcellulose Verdickers / 6,75 % Preventol D2® (Konservierungsmittel) in Wasser).

| Typische Zusammensetzung: | | |
|---|---|---|
| Ölphase (500 ml) | Farbgebermischung Polyisocyanat Lösungsmittel KMC 113 (Diisopropylnaphthalin) | 4,0 % 7,0 % 89,0 % |
| Wasserphase (500 ml) | Emulgator Eiweißhydrolysat Wasser | 1,0% 99,0 % |
| Vernetzer (88 g) | Guanidiniumcarbonat Wasser | 10,0% 90,0 % |
| Slurry | Nichtflüchtige Bestandteile | 47 +/- 2,0 % |

### Beispiel 2

### Typische Versuchsdurchführung

Versuch aus Beispiel 1 wird wiederholt mit der Änderung, dass eine Mischung aus 33,25 g des Biuretgruppen-haltigen Polyisocyanats (DESMODUR® N 3200) und 1,75 g eines mit 17 % Polyethylenglykolmonomethylether (Molmasse = 350 g/mol) hydrophilierten Isocyanuratgruppen-haltigen Polyisocyanates (Beispiel 1 aus EP-A-564912) an Stelle von Desmodur® N 3200 eingesetzt wird.

Dann wird wie in Beispiel 1 weitere 4 Minuten bei 5200 U/min bei 20 bis 25°C emulgiert. Danach werden 88 g einer 10 % Guanidiniumcarbonatlösung zugegeben und die Dispersion unter Rühren langsam auf 70°C aufgeheizt (2 h). Nach weiteren 2 h bei 70°C wird auf Raumtemperatur abgekühlt.

Die Dispersion wird mit 40 ml Verdicker stabilisiert (2,5 % eines Carboxymethylcelluloseverdickers / 6,75 % Preventol® D2 (Konservierungsmittel) in Wasser).

| Typische Zusammensetzung: | | |
|---|---|---|
| Ölphase (500 ml) | Farbgebermischung Polyisocyanatgemisch Lösungsmittel KMC 113 (Diisopropylnaphthalin) | 4,0 % 7,0 % 89,0 % |
| Wasserphase (500 ml) | Emulgator Eiweißhydrolysat Wasser | 1,0 % 99,0 % |
| Vernetzer (88 g) | Guanidiniumcarbonat Wasser | 10,0 % 90,0 % |
| Slurry | Nichtflüchtige Bestandteile | 47+/-2,0 % |

## Patentansprüche

1. Mikrokapseln mit Wänden, die nach dem Polyadditionsverfahren aus Polyisocyanaten und Polyaminen in einer wäßrigen Emulsion erhältlich sind, wobei als Emulgator Eiweißhydrolysat eingesetzt wird.

2. Mikrokapseln gemäß Anspruch 1, **dadurch gekennzeichnet, daß** bei ihrer Herstellung mindestens bifunktionelle Isocyanate mitverwendet werden, die im Mittel pro Mol mindestens eine Ester- und/oder Amidgruppe in der Hauptkette enthalten.

3. Mikrokapseln gemäß Anspruch 1, **dadurch gekennzeichnet, daß** bei Ihrer Herstellung Isocyanate oder Isocyanatgemische eingesetzt werden, die 100 bis 1 Gew.-% Isocyanate mit dem Mittel pro Mol mindestens eine Esterund/oder Amidgruppe in der Hauptkette enthalten und 0 bis 99 Gew.-% mindestens einer anderen bifunktionellen Isocyanatgruppe enthalten.

4. Mikrokapseln nach Anspruch 1, **dadurch gekennzeichnet, daß** die Polyisocyanate teilweise mit zur Salzbildung befähigten und/oder hydrophilierend wirkenden Verbindungen umgesetzt worden sind.

5. Mikrokapseln nach Anspruch 4, **dadurch gekennzeichnet, daß** als hydrophilierend wirkende Verbindung Polyetherketten eingesetzt werden.

6. Mikrokapseln nach Anspruch 1, **dadurch gekennzeichnet, daß** sie als eingekapselte Materialien in Leukoform vorliegende Farbstoffe, Parfümöle, Pflanzenschutzmittel, Reaktivkleber oder Pharmazeutika enthalten.

7. Mikrokapseln nach Anspruch 1, **dadurch gekennzeichnet, daß** sie in Gegenwart eines hydrophoben Lösungemittels hergestellt werden, wobei als hydro- phobes Lösungsmittel Baumwollsamenöl, Erdnußöl, Palmöl, Rizinusöl, eingesetzt wird.

8. Verwendung von Mikrokapseln nach Anspruch 1, die in Leukoform vorliegende Farbstoffe enthalten zur Herstellung von kohlefreien Durchschreibepapieren.

9. Verfahren zur Herstellung von Mikrokapseln, **dadurch gekennzeichnet, dass** man eine Ölphase, die ein organisches, mit Wasser nicht mischbares, gegenüber Isocyanaten inertes Lösungsmittel, den zu verkapselnden Stoff und Polyisocyanate enthält, in einer Wasserphase, die als Emulgator Eiweißhydrolysate und gegebenenfalls Zusatzstoffe enthält, emulgiert und der Emulsion einen NH₂-Gruppen enthaltenden Vernetzer (Polyamin) zufügt, der mit Isocyanatgruppen reagieren kann.
